# EUROPEAN PATENT SPECIFICATION

(11) **EP 2 574 443 B1**
(45) Date of publication and mention of the grant of the patent: **25.10.2017**
(21) Application number: 12185953.2
(22) Date of filing: 25.09.2012
(51) Int. Cl.: B29C 47/36, B29D 30/60, B29C 47/92, B29B 7/00, B29L 30/00, B60C 11/00

(54) **METHOD FOR FORMING A TIRE COMPONENT AND PNEUMATIC TIRE**
VERFAHREN ZUR HERSTELLUNG VON REIFENKOMPONENTEN UND REIFEN
PROCÉDÉ DE FORMATION D'UN COMPOSANT DE PNEU ET PNEU

(30) Priority: 27.09.2011 US 201161539690 P; 21.08.2012 US 201213590640
(43) Date of publication of application: 03.04.2013
(73) Proprietor: The Goodyear Tire & Rubber Company, Akron, OH 44316-0001 (US)
(72) Inventor: Kaes, Christian, L-9184 Schrondweiler (LU); Maitre, Bruno Pierre, L-8041 Strassen (LU); Burg, Gary Robert, Massillon, OH Ohio 44646 (US); Koch, Brian Richard, Hartville, OH Ohio 44632 (US); Dyrlund, Christopher David, Canton, OH Ohio 44705 (US)
(74) Representative: Kutsch, Bernd

(56) References cited:
- EP-A1- 2 338 662
- EP-A2- 0 970 797
- EP-A2- 2 338 655
- FR-A1- 2 955 583
- US-A1- 2005 087 906

## Description

### Field of the Invention

The invention relates in general to tire manufacturing, and more particularly to continuous production of custom rubber mixtures.

### Background of the Invention

Tire manufacturers have progressed to more complicated designs due to an advance in technology as well as a highly competitive industrial environment. In particular, tire designers seek to use multiple rubber compounds in a tire in order to meet customer demands. Using multiple rubber compounds per tire can result in a huge number of compounds needed to be on hand for the various tire lines of the manufacturer. For cost and efficiency reasons, tire manufacturers seek to limit the number of compounds available due to the extensive costs associated with each compound. Each compound typically requires the use of a Banbury mixer, which involves expensive capital expenditures. Furthermore, Banbury mixers have difficulty mixing up tough or stiff rubber compounds. The compounds generated from the Banbury mixers are typically shipped to the tire building plants, thus requiring additional costs for transportation. The shelf life of the compounds is not finite, and if not used within a certain time period, is scrapped.

Thus an improved method and apparatus is desired which substantially reduces the need for the use of Banbury mixers while providing an apparatus and methodology to provide custom mixing at the tire building machine by blending of two or more compounds together, and controlling the ratio of the compounds and other additives. Both non-productive compounds and productive compounds could be blended together. It is further desired to have a system at the tire building machine which provides for the ability to manufacture customizable compounds with accelerators. Yet an additional problem to be solved is to generate the compounds continuously at the tire building machine.

EP-A-2 388 662 and EP-A-2 338 655 describe a method and a tire in accordance with the preamble of claims 1 and 10 respectively.

US-A-2005/0087906 describes a process and apparatus for continuously producing an elastomeric composition.

EP-A-0 970 797 describes a method and apparatus for the lamination of band-shaped uncured rubber materials feeding continuously a first rubber material and a second rubber material into an extruder.

FR-A-2-955 583 describes a process of manufacturing a self-sealing elastomeric composition.

### Summary of the Invention

The invention relates to a method in accordance with claim 1 and to a tire in accordance with claim 10.

Dependent claims refer to preferred embodiments of the invention.

In a preferred aspect of the invention, the tire comprises three or more zones of different mixtures of rubber, wherein the transition in terms of rubber composition from each of said zones to an adjacent one of said zones is continuous.

In one aspect of the invention, the tire component is a sidewall insert in a sidewall of the tire wherein the two or more adjacent zones are located radially adjacent.

In one aspect of the invention, the tire component is a sidewall insert in a sidewall of the tire wherein the two or more adjacent zones are located axially adjacent.

In a preferred aspect of the invention, the method of forming an insert for a tire formed from a first compound and a second compound, the insert comprising two or more zones of different mixtures of rubber, the method comprising the steps of:
i) extruding a first rubber compound through a main extruder and a main gear pump;
ii) extruding a second rubber compound through a second extruder and a second gear pump into said main extruder;
iii) varying the ratio of said first compound to said second compound by adjusting the speed of the main gear pump and the speed of the second gear pump, and then applying a strip of rubber formed of said first compound and said second compound directly onto a tire building machine to form a first zone of rubber having a first blend ratio, wherein the first zone of rubber is extruded in a first desired shape; and
iv) adjusting the speed of the main gear pump and the second gear pump to obtain a second blend ratio of said first compound to said second compound, and then applying a strip of rubber formed of said second blend ratio of the first compound to the second compound to form a second zone of rubber having a second blend ratio over said first layer of rubber.

### Definitions

"Inserts" means the reinforcement typically used to reinforce the sidewalls of runflat-type tires; it also refers to the elastomeric insert that underlies the tread.

### Brief Description of the Drawings

The invention will be described by way of example and with reference to the accompanying drawings in which:
FIG. 1 is a schematic of a mixing system used for the present invention;
FIG. 2 is a schematic showing exemplary output from the mixing system;
FIG. 3 illustrates a cross-sectional profile of a tread of the present invention;
FIG. 4 illustrates a chart of Grosch abrasion Cal. Rate vs. Tan delta at 10% strain (100 deg C, 1 Hz) for output generated from the mixing system;
FIG. 5 is a schematic illustrating a tread profile broken down into grid points; and
FIG. 6 illustrates a continuously stratified tread of the present invention; and
FIG. 7 illustrates a continuously stratified insert of the present invention.

### Detailed Description of the Example Embodiments of the Invention

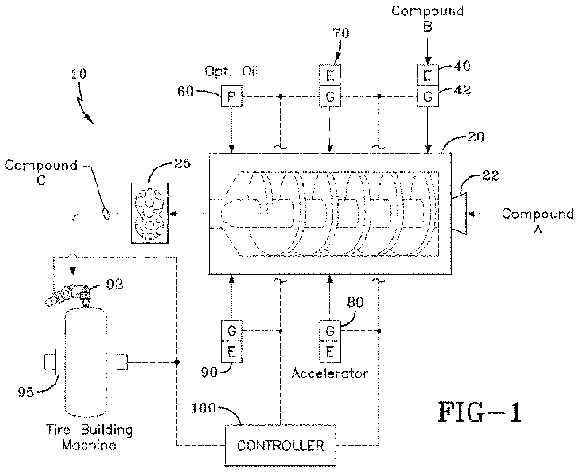

Figure 1 illustrates a first embodiment of a method and apparatus 10 for a continuous mixing system suitable for use for making rubber compositions for tires or tire components. The continuous mixing system is not limited to tire applications and may be used for example, to make other rubber components not related to tires such as conveyors, hoses or belts. The mixing system may be provided directly at the tire building machinery for direct application of the rubber composition to a tire building drum or other tire building apparatus. In Figure 1 a continuous mixing apparatus 10 is illustrated, which includes a main extruder 20. The extruder 20 has an inlet 22 for receiving a first compound A, which may be a productive or non-productive rubber composition. The extruder may comprise any commercial extruder suitable for processing of rubber or elastomer compounds. The extruder may comprise a commercially available extruder commonly known by those skilled in the art as a pin type extruder, a twin screw or a single screw extruder, or a ring type of extruder. One commercially available extruder suitable for use is a multicut transfermix (MCT) extruder, sold by VMI Holland BV, The Netherlands. Preferably, the extruder has an L/D of 8, but may range from 5 to 25, preferably 10-15. A ring type, pin type or MCT type of extruder is preferred. The extruder functions to warm up the compound A to the temperature in the range of from 80°C to 150°C, preferably 90°C to 120°C, and to masticate the rubber composition as needed.

A second compound, referred to as "compound B" enters the extruder 20 and is mixed with compound A. Compound B may also comprise a productive or non-productive rubber composition. Examples of compound B compositions are described in more detail, below. Compound B is first extruded by second extruder 40 and a second gear pump 42 prior to entering the main extruder 20. Compound B is output from the gear pump 42 into the main extruder in a controlled amount. The second extruder 40 may be a conventional pin type, ring type, dual screw or single screw type extruder. The gear pump 42 functions as a metering device and a pump and may have gears such as planetary gears, bevel gears or other gears. The extruder 40 and gear pump 42 may also be a combination unit. Preferably, compound B enters the main extruder between the entrance 22 and about 1/3 the length of the extruder as measured from the entrance.

The main extruder blends compound A and compound B together in a precisely controlled amount. Oil may be optionally injected into the main extruder 20 via an oil pump 60 at any desired location. The oil controls the viscosity of the compound mixture.

The apparatus 10 may further include a first additive pumping device 70 for pumping one or more additives such as a primary accelerator, which may be optionally added to the mixture at the main extruder 20 or a gear pump 25. The apparatus may further include a second additive pumping device 80 for pumping one or more additives such as a secondary accelerator into the main extruder 20 or the gear pump 25. The apparatus may further include a third additive pumping device 90 for pumping one or more additives such as a third accelerator into the main extruder 20 or the gear pump 25. The additive pumps 70, 80, 90 may be a gear pump, a combination gear pump and extruder, a venturi pump or other pumping means known to those skilled in the art.

If more than one accelerator is used, they may be added into the mixture separately or together. For example, a primary accelerator and a secondary accelerator may both be added. Accelerators are used to control the time and/or temperature required for vulcanization and to improve the properties of the rubber. The accelerator may be in powder form or an encapsulated powder into a resin or rubber base. Examples of accelerator compositions are described in more detail, below.

Other additives include a curative agent or precursor, which may also be added to the extruder 20 via additive pump 90. One example of a curative agent is sulfur. The sulfur may be added in solid form.

The main extruder 20 outputs a rubber mixture which may be a precise mixture of the A and B compound, optional oil and optional accelerants and optional additives, and is referred to as compound C. The output mixture of compound C exits the main extruder 20 and enters a gear pump 25. The gear pump 25 is preferably located adjacent a tire building station 95 for direct application onto a core, tire blank buffed carcass for a retreaded tire or tire building drum, as shown in Figure 1. Gear pump 25 may preferably comprise a special nozzle or shaping die 92 which applies the compound formulation output from the gear pump 25 directly onto the tire building machine 95 in strips which are wound onto a tire building drum or core.

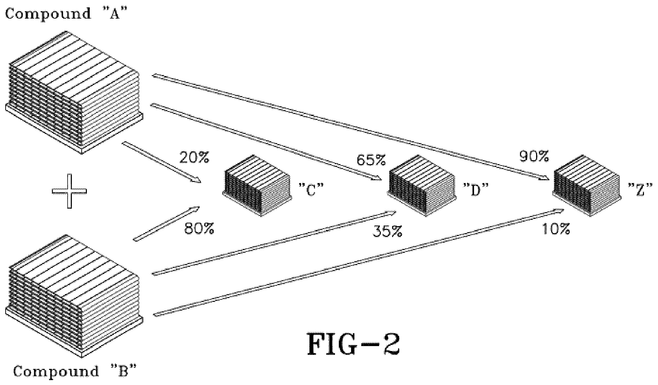

The ratio of the volumetric flow rate of compound A to the volumetric flow rate of compound B is precisely controlled by the ratio of the speed of the gear pump 25 for compound A and the speed of gear pump 42 for compound B. For example, the compound output from the system 10 may comprise a ratio of 20% of compound A and 80% of compound B by volume, as shown in Figure 2. Alternatively, the compound output from the system may comprise a mixture D having a ratio of 35% of compound B and 65% of compound A by volume. Alternatively, the compound output from the system may comprise a mixture Z having a ratio of 10% of compound B and 90% of compound A by volume. The ratio of compound A to compound B can thus range from 0:100% to 100%:0. The ratio may be adjusted instantaneously by varying the speeds of gear pumps 25 and 42 by a computer controller 100. The computer controller 100 may additionally controls the extruder and gear pump operating parameters such as operating pressure, operating temperature, pump or screw speed.

Preferably, the computer controller 100 sets a pressure target value for the exit pressure of each extruder. The extruder speed is controlled by the controller, and is varied until the pressure target is met. The pressure target value affects the quality of mixing by causing backflow of the material in the extruder.

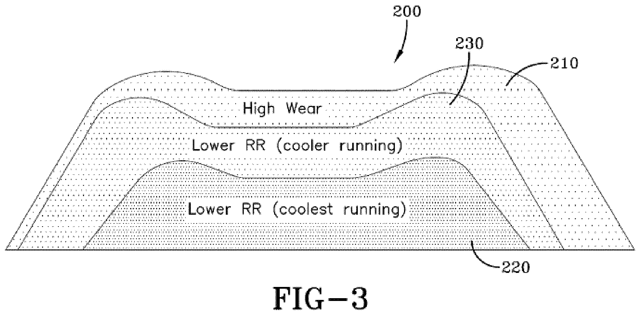

In a comparative example, a stratified tread 200 is formed having a cross-sectional profile as shown in Figure 3. The stratified tread is comprised of three or more layers. The radially outermost layer 210 is preferably formed of a tread compound (compound A) that has high wear resistance. High wear resistant tread compounds tend to be stiff compounds, with high fillers. The radially innermost layer 220 is preferably formed of a compound having low or ultra low rolling resistance (compound B). Compounds that have low rolling resistance are generally soft compounds with low fillers. Low rolling resistance compounds tend to have a high wear rate. The middle layer 230 is preferably formed of a blend of the compound selected for the radially outermost layer 210 (compound A) and the radially innermost layer 220 (compound B).

In order to form the tread, a first layer of compound A is extruded onto a form or tire building machine. The tread may be extruded in strips onto the tire building machine. The mixing system of Figure 1 may be utilized, with the desired compound A selected being fed into the extruder 20. The compound A exits the gear pump 25 and is fed onto tire building drum 95 via nozzle 92. The compound A is extruded onto the tire drum in the desired profile.

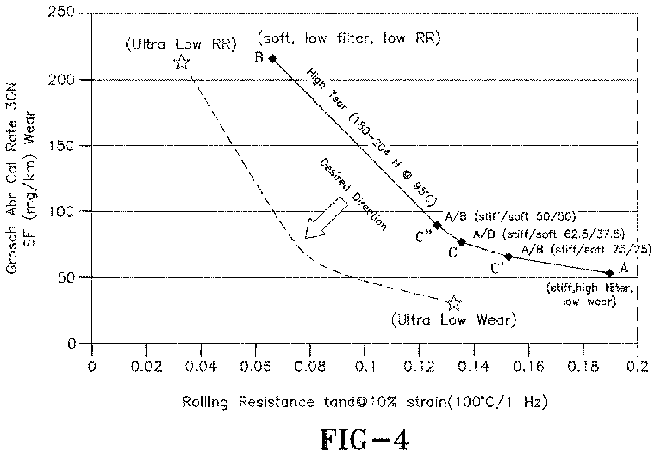

In order to form the middle layer 230, compound A is blended with compound B. Compound B is selected to have low rolling resistance properties. The desired properties of the middle layer dictate the blend ratio of the compounds. For example, as shown in Fig. 4, a 50-50 ratio of Compound A to compound B produces a low rolling resistance compound with low wear resistance (point C). Adjusting the ratio to 75-25 of Compound A to compound B produces a slightly higher rolling resistance compound as compared to C with lowest wear resistance (C"). After the desired blend ratio is selected, the compound A is blended with compound B using a ratio of the gears to get the precise blending. The blend is then extruded onto the tire building drum in the desired profile.

Next, the outer layer if formed by extruding compound B onto the tire building drum over the middle layer in the desired profile. The outer layer may also be a blend of compound A with compound B to arrive at the desired properties.

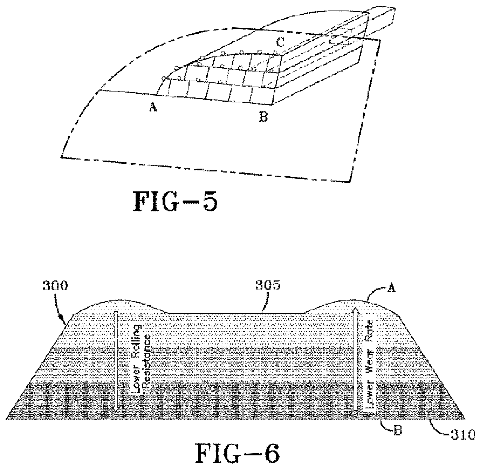

Figure 6 illustrates a second comparative example of a stratified tread profile 300. The radially outer surface 305 is formed of 100% of compound A. In this example, compound A is selected to have high wear resistance. High wear resistant tread compounds tend to be stiff compounds, with high fillers. The radially innermost layer 310 is formed of compound B. Compound B is selected to have low rolling resistance properties, although other compound properties may be selected.

To form the tread, the mixing system of Figure 1 may be utilized, with the desired compound A being fed into the extruder 20. The compound A exits the gear pump 25 and is fed onto tire building drum 95 via nozzle 92. The compound A is extruded onto the tire drum in a first layer. A second layer is then extruded over the first layer. The second layer is a blend of compound A and compound B. In one example, the second layer may be formed of 10% compound A with 90% compound B. The mixing system of Figure 1 is adjusted via speed of gear pumps 25 and 42 so that the output mixture comprises 10% compound A with 90% compound B. A third layer is then extruded over the first layer. The third layer may comprise 20% compound A with 80% compound B. A fourth layer may then be extruded over the third layer, and having a 30-70 ratio. The process may be repeated until the outer layer is formed from 100% compound A.

The tread may also be formed by varying the composition or blend ratio of the rubber mixture in the axial direction. The tread may also be formed by varying the composition or blend ratio of the rubber mixture in both the axial and radial direction as desired. Figure 5 illustrates a portion of the tread profile broken into small increments. Once the ideal tread profile has been designed, the tread profile is broken down into small incremental blocks A, B, C, and the desired blend ratio is selected for each incremental block. Utilizing the computer control, one or more strips having the desired blend ratio may be applied to the tire building drum. The blend ratio may vary in the radial direction, the axial direction, or both directions as desired.

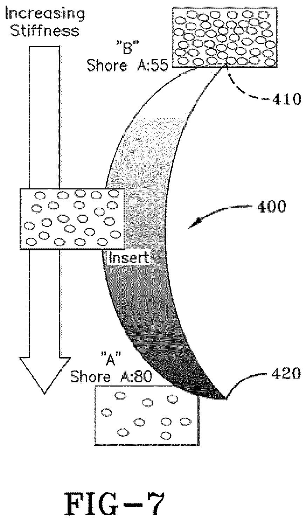

Figure 7 illustrates an embodiment of the invention illustrating an insert 400 having a stiffness gradient. The insert component is typically used to make tires having stiffened sidewalls so that the tire does not collapse when the tire loses air. These tires are typically referred to in the industry as run flat or run on flat tires. The insert is typically crescent shaped or lenticular and is typically located in the inner peripheral surface of the sidewall portion of the carcass. The insert of the present invention has a stiffness gradient that varies from a radially outer end 410 to a radially inner end 420. Preferably, the insert has increasing stiffness from the radially outer end to the radially inner end, so that the stiffness of the radially inner end 420 is greater than the stiffness at the radially outer end 410. The radially innermost end 420 is formed of 100% of compound A. Compound A is selected to be made of a very stiff rubber compound, having a Shore A hardness in the range of about 70-90, and more preferably in the range of 75-85. In this example Compound A is selected to be formed of a compound having a shore A hardness of 80. Other desired properties may also be utilized.

The insert at the radially outer end 410 is selected to be formed of a "soft" or flexible compound having a Shore A hardness in the range of from 40 to 60, more preferably in the range of from 45 to 55. At the radially outer end 410, the insert is formed of 100% of a compound "B".

Figure 5 illustrates a portion of a tire component profile broken into small blocks or zones. Once the ideal insert profile has been designed, the insert profile is broken down into small incremental zones A, B, C, and the desired blend ratio is selected for each incremental zone. Each zone is formed of one or more annular passes of a strip of rubber having the desired rubber blend. One zone may be smaller than another zone, and may only require one annular revolution of the strip. Other zones may require multiple annular passes of the strip to form the zone. Each zone may have a different size, depending on the material characteristics desired of the insert.

The extruder computer controls system is used to coordinate the extruder compound mixture ratio and the application of the strip onto the tire building drum in accordance with the desired zone compound mixture and number of passes for each zone of the insert profile.

### Example 1

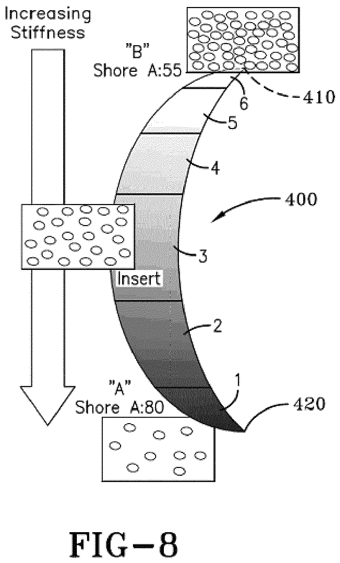

To form a first example of an insert of the present invention, the mixing system of Figure 1 may be utilized, with 100% of the desired compound A being fed into the extruder 20. The compound A exits the gear pump 25 and is fed onto the tire building drum 95 via the nozzle 92 in the sidewall area. The insert is divided into multiple zones, wherein each zone may be formed of compound A, compound B and mixtures thereof. Compound A is extruded in strip form onto the tire drum in a first zone to form the radially innermost end 420 of the insert 400. The first zone is formed of 100% of compound A. Next, a second zone is then extruded over the first zone. The second zone is a blend of compound A and compound B. In one example, the second zone may be formed of 15% compound B with 85% compound A. The mixing system of Figure 1 is adjusted via speed of gear pumps 25 and 42 so that the output mixture comprises 15% compound B with 85% compound A. A third zone is then extruded over the second zone. The third zone may comprise 30% compound B with 70% compound A. A fourth zone may then be extruded over the third zone, and having a 50% B -50% A ratio. A fifth zone may then be extruded over the fourth zone and have a 60% compound B - 40% compound A ratio. A sixth zone may then be extruded over the fixth zone, forming the radially outer end 410 of the insert of 100% compound A. The tire properties of example 1 is shown in Table 1 and further illustrated in Figure 8. The G' in table 1 is a cured G' with a testing temperature of 100ºC, 10 Hz and a strain of 1% and a cure of 4.9 min at 191ºC.

**Table 1**

| Zone | BLEND RATIO A/B | SHORE A | G' 1% | TAN DELTA | HOT REBOUND | COLD REBOUND |
|---|---|---|---|---|---|---|
| 1 | 100/0 | 82 | 3.65 | 0.048 | 81 | 75 |
| 2 | 85/15 | 77 | 2.32 | 0.035 | 84 | 78 |
| 3 | 70/30 | 68 | 1.51 | 0.024 | 86 | 80 |
| 4 | 50/50 | 62 | 1.12 | 0.013 | 87 | 80 |
| 5 | 40/60 | 59 | 0.96 | 0.009 | 88 | 81 |
| 6 | 0/100 | 46 | 0.5 | 0.008 | 88 | 82 |

Unless otherwise noted, all G' values are measured on an cured (4.9 min at 191ºC) rubber sample temperature of 100ºC, at a measurement frequency of 10 Hz and at a strain amplitude of 1%. The rubber sample is taken from a cured tire manufactured to the desired manufacturer specifications. For the purposes of this invention, the storage modulus property G' is a viscoelastic property of a rubber composition and may be determined by a dynamic mechanical analyzer over a range of frequencies, temperature and strain amplitude. One example of a dynamic mechanical analyzer (DMA) suitable for measuring G', G" is model number DMA +450 sold by the 01-dB Metravib company. The DMA instrument uses dynamic mechanical analysis to evaluate rubber compositions. A cured sample of the respective rubber composition is subjected to a precisely controlled dynamic excitation (frequency and amplitude) at a frequency (Hertz) and temperature (°C) and the sample stress response is observed by the instrument. The observed sample response can be separated, by the instrument, into viscous or loss modulus (G") and elastic or storage modulus (G') components. Unless otherwise indicated, all G" are measured at the same conditions as G'.

The following are compositions which may be used in conjunction with the invention.

### I. Accelerator Compositions

In one embodiment, a single accelerator system may be used, i.e., primary accelerator. The primary accelerator(s) may be used in total amounts ranging from 0.5 to 4, alternatively 0.8 to 1.5, phr. In another embodiment, combinations of a primary and a secondary accelerator might be used with the secondary accelerator being used in smaller amounts, such as from 0.05 to 3 phr, in order to activate and to improve the properties of the vulcanized rubber. Combinations of these accelerators might be expected to produce a synergistic effect on the final properties and are somewhat better than those produced by use of either accelerator alone. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound. Suitable guanidines include dipheynylguanidine and the like. Suitable thiurams include tetramethylthiuram disulfide, tetraethylthiuram disulfide, and tetrabenzylthiuram disulfide.

### II. Rubber Compositions

Representative rubbers that may be used in the rubber compound include acrylonitrile/diene copolymers, natural rubber, halogenated butyl rubber, butyl rubber, cis-1,4-polyisoprene, styrene-butadiene copolymers, cis-1,4-polybutadiene, styrene-isoprene-butadiene terpolymers ethylene-propylene terpolymers, also known as ethylene/propylene/diene monomer (EPDM), and in particular ethylene/propylene/dicyclopentadiene terpolymers. Mixtures of the above rubbers may be used. Each rubber layer may be comprised of the same rubber composition or alternating layers may be of different rubber composition.

The rubber compound may contain a platy filler. Representative examples of platy fillers include talc, clay, mica and mixture thereof. When used, the amount of platy filler ranges from 25 to 150 parts per 100 parts by weight of rubber (hereinafter referred to as phr). Preferably, the level of platy filler in the rubber compound ranges from 30 to 75 phr.

The various rubber compositions may be compounded with conventional rubber compounding ingredients. Conventional ingredients commonly used include carbon black, silica, coupling agents, tackifier resins, processing aids, antioxidants, antiozonants, stearic acid, activators, waxes, oils, sulfur vulcanizing agents and peptizing agents. As known to those skilled in the art, depending on the desired degree of abrasion resistance, and other properties, certain additives mentioned above are commonly used in conventional amounts. Typical additions of carbon black comprise from 10 to 150 parts by weight of rubber, preferably 50 to 100 phr. Typical amounts of silica range from 10 to 250 parts by weight, preferably 30 to 80 parts by weight and blends of silica and carbon black are also included. Typical amounts of tackifier resins comprise from 2 to 10 phr. Typical amounts of processing aids comprise 1 to 5 phr. Typical amounts of antioxidants comprise 1 to 10 phr. Typical amounts of antiozonants comprise 1 to 10 phr. Typical amounts of stearic acid comprise 0.50 to 3 phr. Typical amounts of accelerators comprise 1 to 5 phr. Typical amounts of waxes comprise 1 to 5 phr. Typical amounts of oils comprise 2 to 30 phr. Sulfur vulcanizing agents, such as elemental sulfur, amine disulfides, polymeric polysulfides, sulfur olefin adducts, and mixtures thereof, are used in an amount ranging from 0.2 to 8 phr. Typical amounts of peptizers comprise from 0.1 to 1 phr.

### III. Oil

The rubber composition may also include up to 70 phr of processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

## Claims

1. A method of forming a tire component (200, 300, 400) comprising a first rubber compound and a second rubber compound, the tire component (200, 300, 400) comprising two or more zones of different mixtures of rubber, the method comprising the steps of:
(i) extruding a first rubber compound through a main extruder (20) and a main gear pump (25);
(ii) extruding a second rubber compound through a second extruder (40) and a second gear pump (42) into the main extruder (20);
(iii) varying or tuning the ratio of the first compound to the second compound by adjusting the speed of the main gear pump (25) and/or the speed of the second gear pump (42) to obtain a first blend ratio of the first compound to the second compound and then applying a first rubber profile formed of the first compound and the second compound directly onto a tire building machine (95) to form a first zone of rubber having the first blend ratio, wherein the first zone of rubber is extruded in a first desired shape; and
(iv) adjusting the speed of the main gear pump (25) and/or the second gear pump (42) to obtain a second blend ratio of the first compound to the second compound, the second blend ratio being different from the first blend ratio, and then applying a second rubber profile formed of the first compound and the second compound to form a second zone of rubber having the second blend ratio, wherein the second zone of rubber is extruded in a second desired shape,
**characterized in that** the tire component is a sidewall insert (400) of the tire having two or more radial or axial adjacent zones of rubber, **in that** the transition from the first zone of rubber to the second zone of rubber is continuous, and **in that** the sidewall insert (400) has a stiffness gradient that varies from a radially outer end (410) to a radially inner end (420).

2. The method of claim 1 wherein the second rubber profile is applied directly onto the tire building machine (95).

3. The method of claim 1 or 2 wherein the tire component is divided into at least three zones.

4. The method of at least one of the previous claims wherein a third zone of rubber is formed over the second zone of rubber by adjusting the speed of the main gear pump (25) and/or the speed of the second gear pump (25) to provide a third blend ratio of the first compound to the second compound, the third blend ratio being different from the second blend ratio, and then applying a third rubber profile formed of the first compound and the second compound to form a third zone of rubber having the third blend ratio, wherein the third zone of rubber is extruded in a third desired shape.

5. The method of claim 4 wherein the third rubber profile is a rubber strip or a continuous rubber strip.

6. The method of claim 4 or 5 wherein the third zone of rubber is over the second zone of rubber and/or over the second zone of rubber.

7. The method of at least one of the previous claims wherein the at least one of the first, second or third rubber profile, preferably the first, second and third rubber profile, is applied to the tire building machine (95) using a gear pump in combination with a nozzle.

8. The method of at least one of the previous claims wherein the first compound has a Shore A hardness in the range of from 70 to 90; and/or wherein the second compound has a Shore A hardness in the range of from 45 to 55.

9. The method of at least one of the previous claims, the method comprising repeating steps (iii) and (iv) to form additional zones of rubber having a respective desired blend ratio.

10. A pneumatic tire comprising a tire component (200, 300, 400) manufactured according to the method of claim 1, the tire component (200, 300, 400) comprising two or more adjacent zones of different mixtures of rubber, wherein the transition in terms of rubber composition from at least one of the two or more zones of different mixtures of rubber to an adjacent zone of the two or more zones of different mixtures of rubber is continuous, **characterized in that** the tire component is a sidewall insert (400) of the tire having two or more radial or axial adjacent zones of rubber, and **in that** the sidewall insert (400) has a stiffness gardient that varies from a radially outer end (410) to a radially inner end (420).

11. The tire of claim 10 wherein the two or more adjacent zones are located radially adjacent.

12. The tire of claim 10 wherein the two or more adjacent zones are located axially adjacent.

## Patentansprüche

1. Verfahren zur Herstellung eines Reifenbauteils (200, 300, 400), das eine erste Kautschukmischung und eine zweite Kautschukmischung umfasst, wobei das Reifenbauteil (200, 300, 400) zwei oder mehr Zonen aus verschiedenen Kautschukgemischen umfasst, wobei das Verfahren die Schritte umfasst des:
(i) Extrudierens einer ersten Kautschukmischung durch einen Hauptextruder (20) und eine Hauptzahnradpumpe (25);
(ii) Extrudierens einer zweiten Kautschukmischung durch einen zweiten Extruder (40) und eine zweite Zahnradpumpe (42) in den Hauptextruder (20);
(iii) Variierens oder Abstimmens des Verhältnisses der ersten Mischung zu der zweiten Mischung durch Anpassen der Drehzahl der Hauptzahnradpumpe (25) und/oder der Drehzahl der zweiten Zahnradpumpe (42), um ein erstes Mischungsverhältnis der ersten Mischung zu der zweiten Mischung zu erhalten, und dann Aufbringens eines aus der ersten Mischung und der zweiten Mischung gebildeten ersten Kautschukprofils direkt auf einer Reifenbaumaschine (95), um eine erste Zone aus Kautschuk mit dem ersten Mischungsverhältnis zu bilden, wobei die erste Zone aus Kautschuk in einer ersten gewünschten Form extrudiert wird; und
(iv) Anpassens der Drehzahl der Hauptzahnradpumpe (25) und/oder der zweiten Zahnradpumpe (42), um ein zweites Mischungsverhältnis der ersten Mischung zu der zweiten Mischung zu erhalten, wobei das zweite Mischungsverhältnis von dem ersten Mischungsverhältnis verschieden ist, und dann Aufbringens eines aus der ersten Mischung und der zweiten Mischung gebildeten zweiten Kautschukprofils, um eine zweite Zone aus Kautschuk mit dem zweiten Mischungsverhältnis zu bilden, wobei die zweite Zone aus Kautschuk in einer zweiten gewünschten Form extrudiert wird,
**dadurch gekennzeichnet, dass** das Reifenbauteil ein Seitenwandeinsatz (400) des Reifens mit zwei oder mehr radialen oder axialen benachbarten Zonen aus Kautschuk ist, dass der Übergang von der ersten Zone aus Kautschuk zu der zweiten Zone aus Kautschuk kontinuierlich ist, und dass der Seitenwandeinsatz (400) einen Steifheitsgradienten aufweist, der von einem radial äußeren Ende (410) zu einem radial inneren Ende (420) variiert.

2. Verfahren nach Anspruch 1, wobei das zweite Kautschukprofil direkt auf die Reifenbaumaschine (95) aufgebracht wird.

3. Verfahren nach Anspruch 1 oder 2, wobei das Reifenbauteil in mindestens drei Zonen unterteilt ist.

4. Verfahren nach mindestens einem der vorhergehenden Ansprüche, wobei eine dritte Zone aus Kautschuk über der zweiten Zone aus Kautschuk gebildet wird, indem die Drehzahl der Hauptzahnradpumpe (25) und/oder die Drehzahl der zweiten Zahnradpumpe (25) angepasst wird, um ein drittes Mischungsverhältnis der ersten Mischung zu der zweiten Mischung vorzusehen, wobei das dritte Mischungsverhältnis von dem zweiten Mischungsverhältnis verschieden ist, und dann ein aus der ersten Mischung und der zweiten Mischung gebildetes drittes Kautschukprofil aufgebracht wird, um eine dritte Zone aus Kautschuk mit dem dritten Mischungsverhältnis zu bilden, wobei die dritte Zone aus Kautschuk in einer dritten gewünschten Form extrudiert wird.

5. Verfahren nach Anspruch 4, wobei das dritte Kautschukprofil ein Kautschukstreifen oder ein kontinuierlicher Kautschukstreifen ist.

6. Verfahren nach Anspruch 4 oder 5, wobei die dritte Zone aus Kautschuk sich über der zweiten Zone aus Kautschuk und/oder der zweiten Zone aus Kautschuk befindet.

7. Verfahren nach mindestens einem der vorhergehenden Ansprüche, wobei das mindestens eine des ersten, zweiten oder dritten Kautschukprofils, bevorzugt das erste, zweite und dritte Kautschukprofil, unter Anwendung einer Zahnradpumpe in Kombination mit einer Düse auf die Reifenbaumaschine (95) aufgebracht wird.

8. Verfahren nach mindestens einem der vorhergehenden Ansprüche, wobei die erste Mischung eine Shore A-Härte im Bereich von 70 bis 90 aufweist; und/oder wobei die zweite Mischung eine Shore A-Härte im Bereich von 45 bis 55 aufweist.

9. Verfahren nach mindestens einem der vorhergehenden Ansprüche, wobei das Verfahren das Wiederholen der Schritte (iii) und (iv) umfasst, um zusätzliche Zonen aus Kautschuk mit einem jeweiligen gewünschten Mischungsverhältnis zu bilden.

10. Luftreifen, umfassend ein Reifenbauteil (200, 300, 400), das gemäß dem Verfahren nach Anspruch 1 gefertigt ist, wobei das Reifenbauteil (200, 300, 400) zwei oder mehr benachbarte Zonen aus verschiedenen Kautschukgemischen umfasst, wobei der Übergang, in Begriffen der Kautschukzusammensetzung, von mindestens einer der zwei oder mehr Zonen aus verschiedenen Kautschukgemischen zu einer benachbarten Zone der zwei oder mehr Zonen aus verschiedenen Kautschukgemischen kontinuierlich ist,
**dadurch gekennzeichnet, dass** das Reifenbauteil ein Seitenwandeinsatz (400) des Reifens mit zwei oder mehr radialen oder axialen benachbarten Zonen aus Kautschuk ist, und dass der Seitenwandeinsatz (400) einen Steifheitsgradienten aufweist, der von einem radial äußeren Ende (410) zu einem radial inneren Ende (420) variiert.

11. Reifen nach Anspruch 10, wobei die zwei oder mehr benachbarten Zonen sich radial benachbart befinden.

12. Reifen nach Anspruch 10, wobei die zwei oder mehr benachbarten Zonen sich axial benachbart befinden.

## Revendications

1. Procédé de confection d'un composant de bandage pneumatique (200, 300, 400) comprenant un premier composé de caoutchouc et un deuxième composé de caoutchouc, le composant de bandage pneumatique (200, 300, 400) comprenant deux zones ou plus de différents mélanges de caoutchouc, le procédé comprenant les étapes consistant à :
(i) extruder un premier composé de caoutchouc à travers une extrudeuse principale (20) et à travers une pompe à engrenages principale (25) ;
(ii) extruder un deuxième composé de caoutchouc à travers une deuxième extrudeuse (40) et une deuxième pompe à engrenages (42) jusque dans l'extrudeuse principale (20) ;
(iii) faire varier ou régler le rapport du premier composé au deuxième composé en réglant la vitesse de la pompe à engrenages principale (25) et/ou la vitesse de la deuxième pompe à engrenages (42) afin d'obtenir un premier rapport de mélange du premier composé au deuxième composé et appliquer ensuite un premier profil de caoutchouc formé à partir du premier composé et du deuxième composé directement sur une machine de confection de bandage pneumatique (95) pour obtenir une première zone de caoutchouc possédant le premier rapport de mélange, la première zone de caoutchouc étant extrudée dans une première configuration désirée ; et
(iv) régler la vitesse de la pompe à engrenage principal de 25 et/ou de la deuxième pompe à engrenages 42 afin d'obtenir un deuxième rapport de mélange du premier composé au deuxième composé, le deuxième rapport de mélange étant différent du premier rapport de mélange, et appliquer ensuite un deuxième profil de caoutchouc formé à partir du premier composé et du deuxième composé pour obtenir une deuxième zone de caoutchouc possédant le deuxième rapport de mélange, la deuxième zone de caoutchouc étant extrudée dans une deuxième configuration désirée ;
**caractérisé en ce que** le composant de bandage pneumatique est un insert de flanc (400) du bandage pneumatique possédant deux zones de caoutchouc ou plus adjacentes en direction radiale ou en direction axiale, **en ce que** la transition entre la première zone de caoutchouc et la deuxième zone de caoutchouc est continue et **en ce que** l'insert de flanc (400) possède un gradient de rigidité qui varie depuis une extrémité externe en direction radiale (410) jusqu'à une extrémité interne en direction radiale (420).

2. Procédé selon la revendication 1, dans lequel le deuxième profil de caoutchouc est appliqué directement sur la machine de confection de bandage pneumatique (95).

3. Procédé selon la revendication 1 ou 2, dans lequel le composant de bandage pneumatique est divisé en au moins trois zones.

4. Procédé selon au moins une des revendications précédentes, dans lequel on forme troisième zone de caoutchouc par-dessus la deuxième zone de caoutchouc en réglant la vitesse de la pompe à engrenages principale (25) et/ou la vitesse de la deuxième pompe à engrenages (25) pour obtenir un troisième rapport de mélange du premier composé au deuxième composé, le troisième rapport de mélange étant différent du deuxième rapport de mélange, et en appliquant ensuite un troisième profil de caoutchouc formé à partir du premier composé et du deuxième composé pour obtenir une troisième zone de caoutchouc possédant le troisième rapport de mélange, la troisième zone de caoutchouc étant extrudée dans une troisième configuration désirée.

5. Procédé selon la revendication 4, dans lequel le troisième profil de caoutchouc est une bande de caoutchouc ou une bande de caoutchouc continue.

6. Procédé selon la revendication 4 ou 5, dans lequel la troisième zone de caoutchouc est disposée par-dessus la deuxième zone de caoutchouc et/ou par-dessus la deuxième zone de caoutchouc.

7. Procédé selon au moins une des revendications précédentes, dans lequel ledit au moins un profil parmi le premier, le deuxième de troisième profil de caoutchouc, de préférence le premier, le deuxième et le troisième profil de caoutchouc, est/sont appliqués sur la machine de confection de bandage pneumatique (95) en utilisant une pompe à engrenages en combinaison avec une buse.

8. Procédé selon au moins une des revendications précédentes, dans lequel le premier composé possède une dureté Shore A dans la plage de 70 à 90 et/ou dans lequel le deuxième composé possède une dureté Shore A dans la plage de 45 à 55.

9. Procédé selon au moins une des revendications précédentes, le procédé comprenant le fait de répéter les étapes (iii) et (iv) pour obtenir des zones supplémentaires de caoutchouc possédant un rapport de mélange désiré respectif.

10. Bandage pneumatique comprenant un composant de bandage pneumatique (200, 300, 400) confectionné conformément au procédé selon la revendication 1, le composant de bandage pneumatique (200, 300, 400) comprenant deux zones adjacentes ou plus de mélanges différents de caoutchouc, dans lequel la transition en termes de composition de caoutchouc entre au moins une des deux zones ou plus de mélanges différents de caoutchouc et une zone adjacente de deux zones ou plus de mélanges différents de caoutchouc est continue, **caractérisée en ce que** le composant de bandage pneumatique est un insert de flanc (400) du bandage pneumatique possédant deux zones de caoutchouc ou plus adjacentes en direction radiale ou en direction axiale et **en ce que** l'insert de flanc (400) possède un gradient de rigidité qui varie depuis une extrémité externe en direction radiale (410) jusqu'à une extrémité interne en direction radiale (420).

11. Bandage pneumatique selon la revendication 10, dans lequel les deux zones adjacentes ou plus sont disposées en position adjacente en direction radiale.

12. Bandage pneumatique selon la revendication 10, dans lequel les deux zones adjacentes ou plus sont disposées en position adjacente en direction axiale.
